Europäisches Patentamt

(19) ))) European Patent Office

Office européen des brevets

(11) Publication number: **0 007 680**
**B1**

(12) **EUROPEAN PATENT SPECIFICATION**

(45) Date of publication of patent specification: **15.02.84**

(21) Application number: **79200426.9**

(22) Date of filing: **31.07.79**

(51) Int. Cl.³: **F 16 H 35/00, E 05 F 7/06**
**//B62D25/02**

(54) Balancing device.

(30) Priority: **02.08.78 BE 19000**
**21.12.78 NL 7812389**

(43) Date of publication of application:
**06.02.80 Bulletin 80/3**

(45) Publication of the grant of the patent:
**15.02.84 Bulletin 84/7**

(84) Designated Contracting States:
**AT BE CH DE FR GB IT LU SE**

(56) References cited:
**FR - A - 2 025 264**
**FR - A - 2 307 674**
**NL - A - 6 816 981**
**US - A - 2 226 033**
**US - A - 2 797 956**

(73) Proprietor: **Spronck, Emmanuel Servatius Maria**
**Julianalaan 38 P.O. Box 19**
**NL-6269 CO Margraten (NL)**

(72) Inventor: **Spronck, Emmanuel Servatius Maria**
**Julianalaan 38 P.O. Box 19**
**NL-6269 CO Margraten (NL)**

(74) Representative: **De Boer, Hindrik Geert Jan**
**De Lairessestraat 131-135 Postbus 5265**
**NL-1007 AG Amsterdam (NL)**

Courier Press, Leamington Spa, England.

Balancing device

The invention relates to a balancing device which is in particular also suitable for balancing a foldable platform sideboard, such as for trucks and trailers, swing-up cabs and other pivoting members or parts.

With a normal hinge construction the operating personnel has to take up the weight of the hinged member, which either sets limits to the weight and the dimensions of the hinged member, e.g. a platform sideboard, or requires more persons for lifting and lowering the member in question.

It is observed that a platform sideboard for a vehicle, in a simple embodiment, is hingedly attached to or adjacent the platform floor. The maximum height of the platform sideboard may thereby not be larger than the distance between the floor and the ground level, since otherwise the .platform sideboard in lowered position hangs on the ground, as a result of which difficulties during displacement and during loading and unloading are encountered. A limited sideboard height also leads to a limitation of the load and hence to higher carriage rates. It is known from FR—A—2.025.264 to provide a truck with a foldable panel (3, 4, 5), the top member (5) of which is slidable in a guide rail (6) arranged in a vertical beam (8), the bottom member being (4) fixed to a spindle (2) by means of an extension (16). A pinion (9) arranged on this spindle is operated by a hydraulic jack (10) via a chain (12) engaging with the pinion, said chain at the bottom side being connected to a draw spring (13), which in turn is attached to a fixed point of the truck. One may also use a pulley or cable to rotate the spindle. With this construction however no balancing of the panel can be achieved for all angular positions of the side board.

In FR—A—2.307.674 a panel construction of a truck is disclosed, wherein the panel 4 is connected to a lever composed of two hingeable members 9 en 10, making an angle with each other in the rest position. On the lower member a draw spring 16 is pivotally connected at 26, which itself is connected to the frame 28. One may also use a pulling cable connected with the draw spring over a guide wheel (27). This construction is complicated and does not allow a fully balanced condition in all angular positions of the panel.

It is the object of the invention to provide an improved balancing device enabling to fully balance the hinged members.

To this end, in a balancing device, for a member (2) rotatable about a horizontal axis (4) in a frame, and provided with a lever arm (21) affixed with one end to the member (2) to be balanced, a spring member (26) likewise mounted in the frame engaging adjacent the other end (22) of the lever arm, it is proposed according to the invention that said other end (22) of the lever arm (22) is engaged by a pull member (23, 40) pivotally connected therewith, said pull member (23, 40) being connected to a spring (26) and said pull member (23, 40) being so mounted that the pulling force of the lever arm (21) in all positions of said arm (21) extends through a point (30, 30') of the. frame that at least during the hinge action is fixed, whereby in the position wherein the centre of gravity (20) of the member (2) to be balanced is positioned precisely above the axis of rotation (4) thereof, the direction of the pulling force extending in longitudinal direction of the lever arm (21), while the length along which the spring (26), having a linear characteristic, is biased, being equal to the distance between the fixed point (30, 30') on the frame and the point of application 32) of the pull member (23, 40) on the lever arm (21) in said position.

Naturally the length of the lever arm (21) in combination with the spring force is so determined that the member (2) to be balanced in a given position is retained in equilibrium. It has been found that by the choice of the fixed point (20, 30') on the frame through which extends the force of the pull member with the indicated spring bias, the member to be balanced is fully balanced in any angular position.

It is observed that the balancing device is not restricted to an angle smaller than 90°, 180°, or even 360° or more or other specific angles, but that independently of the initial or end point of the hinge movement and at all angles, both to the left and to the right, the proper balancing is ensured.

Some embodiments of the invention will now be explained, by way of example, with reference to the accompanying drawings, likewise showing further particulars of the invention.

Figure 1 diagrammatically shows a balancing device according to the invention;

Figure 2 shows a variant of the balancing device of Figure 1;

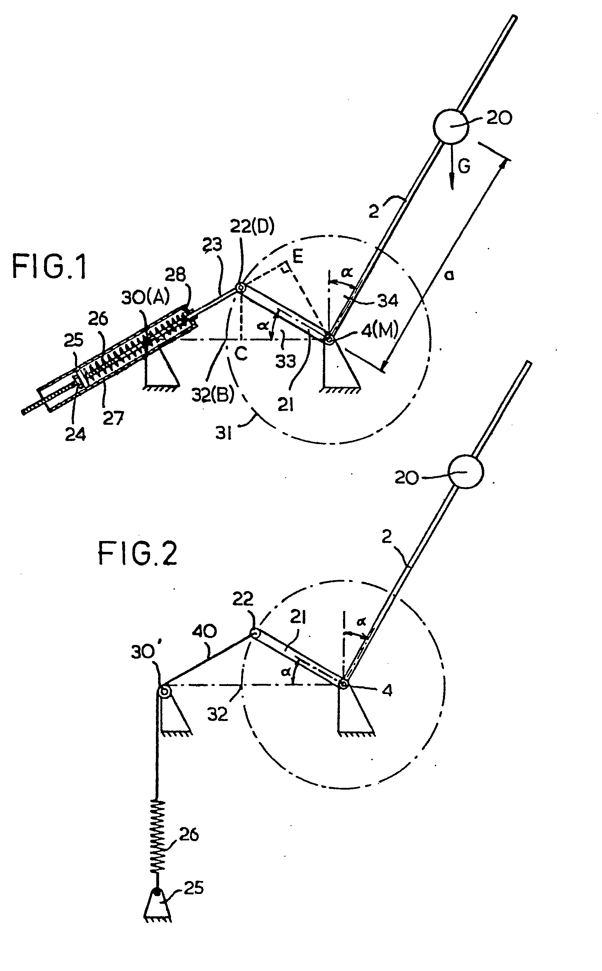

A balancing device according to the invention is diagrammatically shown in Figure 1.

The hinge member to be balanced is shown by 2, while the centre of gravity is indicated by 20. The distance from said centre of gravity 20 to the axis of rotation 4 of the member 2 to be balanced is indicated by a. A lever arm 21 is fixedly connected to the hinge member 2. The end of said lever arm engages at 22 a pull member 23. Said pull member, in Figure 1 a rod, is fitted with an adjustable nut 24 and spring cup 25 against which rests a compressing spring 26. Said spring 26 is disposed in a spring housing 27 with spring cup 28, against which the other end of spring 26 rests. The spring housing 27 is pivotally mounted at 30 to a frame, not shown, whereon likewise the axis 4 is mounted. The point 22 may be displaced on a circle 31 around the axis 4. On the connection line between axis 4 and pivot point 30 there is present the point 32 on the circle 31. When the pull rod 23 and the lever arm 21 are co-extensive, the point 22 coincides with point 32. In this position the centre of gravity 20 is precisely above the axis of rotation 4 in that the angle 33 between the lever arm 21 and the connection line 30—4 is equal to the angle 34 between the hinge member 2 and the vertical.

In the example these angles are indicated by $\alpha$.

It has been found that when in the position wherein $\alpha=0$, so the centre of gravity 20 being precisely above the axis 4, the pull rod 23 and the lever arm 21 are co-extensive and the length along which the spring 26 is biassed is just equal to the distance 30—32, the part 2 is fully balanced in any angular position when this part is balanced in one position only. This may be explained as follows, it being understood;

30=A
32=B
22=D
4=M

while furthermore, in elucidation of Figure 1, is indicated the point C perpendicular underneath 22 on the line AM, while the point E indicates the perpendicular from the point 4 or M on the extension of the pull rod 23.

In Figure 1 then applies:

$$AD=\sqrt{(AM-BM.\,\cos\alpha)^2+(BM.\,\sin\alpha)^2}$$

$$ME=\frac{AM\times DC}{AD}=\frac{AM\times BM.\,\sin\alpha}{AD}$$

The torque exerted by the part to be balanced about the axis 4 (or the point M) is $G\times a.\,\sin\alpha$. The spring-produced torque is determined by the force of the spring, i.e. the spring constant $C'\times$the compression. Said compression in the stretched position, at the position wherein point 22 and 32 (D=B) coincide, is equal to the distance AB. (The bias was equal to the distance 30—32 or A—B).

In a random position said spring force is $AD\times C'$. This force exerted by the spring acts on the lever arm 21, viz. proportional to the effective arm length ME. As a result it applies for the spring-exerted torques $C'\times AD\times ME$. When ME is replaced therein by

$$\frac{AM\times BM.\,\sin\alpha}{AD}$$

this becomes $C'\times AM\times BM.\,\sin\alpha$.

The balancing moment supplied is therefore directly proportional to $\sin\alpha$, while the required balancing moment for the weight G is equal to $G\times a.\,\sin\alpha$. It follows there from that for each angle the whole is equilibrium if:

$$G\times a.\,\sin\alpha=C'\times AM\times BM.\,\sin\alpha$$

or

$$G\times a=C'\times AM\times BM.$$

In this formula there are only constants, viz. G a, C', AM and BM. When therefore the various magnitudes are so chosen that this equation is valid for one position, the equilibrium is ensured in any angular position of the member 2 to be balanced. It is observed that possibly the pivot point 30 (A) may be movably designed, in particular also on the line 30—4 (AM). This may be advantageous when previously the accurate weight G of the member 2 to be balanced is not known or variable so that adjustment is required. At a random position the point 30 may then be displaced so that the member to be balanced is just fully balanced. Thereafter the balancing is also complete then in any other angular position.

It is observed that when, starting from such a completely balanced position, the point 30 is further removed, from point 4, or the weight to be balanced G is smaller than calculated, still a complete balancing can be obtained at one given angular position by adapting the bias of the spring by means of the nut 24. In that particular position there is then obtained, true, a complete balancing, but this results in that at an angular position of:

0 to $\alpha$: the balancing force ranges from too small to good;
$\alpha$ to 180°: ranges from good to too large;
180° to (360°—$\alpha$): ranges from too large to good;
(360°—$\alpha$) to 360°: ranges from good to too small.

If the distance 30—4 (AM) is selected too small or when the weight to be balanced G is larger than calculated, an inverse pattern of the balancing force will be obtained.

It is observed that the lever arm 21 need not be oriented right-angled to the member to be balanced 2, as indicated in Figure 1. The lever arm 21 may be positioned at a random angle relative to the member 2, provided only in the vertical position of the member 2 the pull rod 23 and the lever arm 21 are coextensive.

It is possible to obtain a required deviation from the complete balancing by means of

1) a change of the distance 30—4, as explained in the above;
2) a change of the weight to be balanced or the resiliency (spring constant), as also explained in the above;
3) a change in vertical direction of the point 30 relative to the pivot pin 4.

Naturally, also a combination of these variations is possible. Although in the embodiment the point 30 lies beyond the circle 31, this point may also lie within the circle and even on the circle, thereby nevertheless achieving a complete balancing in all positions.

The distance 30—4 (AM) is then equal to or smaller than the length of the lever arm 21. This may be desirable e.g. for swing-up cabs of trucks.

Figure 2 shows an embodiment wherein the pull rod 23 is replaced by a pulling cable 40 which is guided over a guide wheel 30'. The spring 26 may thereby be mounted at any place in the frame, in the example vertically downwards underneath the point 30'.

Instead of one guide wheel 30', also more guide wheels may be superimposed. This is in particular of importance when from the position shown in Figure 2 and with a horizontally mounted spring, for instance a tipping through 90° counter clockwise is required.

This may be the case e.g. upon application of swing-up cabs.

It is observed that as spring member may be used any type of spring showing in the working range a substantially linear spring characteristic, so not only of a compression spring but also of an extension spring, a hydraulic spring or of a gas spring, possibly a combination of springs.

## Claims

1. A balancing device for a member (2) rotable about a horizontal axis (4) in a frame and provided with a lever arm (21) fixedly connected with one end to the member (2) to be balanced, a spring member (26) likewise mounted in the frame engaging adjacent the other end (22) of the lever arm (21), characterized in that said other end (22) of the lever arm (21) is engaged by a pull member (23, 40) pivotally connected therewith, said pull member (23, 40) being connected to a spring (26) and said pull member (23, 40) being so mounted that the pulling force on the lever arm (21) in all positions of said arm (21) extends through a point (30, 30') of the frame that at least during the hinge movement is fixed, whereby in the position wherein the centre of gravity (20) of the member (2) to be balanced is positioned precisely above the axis of rotation (4) thereof, the direction of the pulling force extending in longitudinal direction of the lever arm (21), the length along which the spring (26), having a linear characteristic, is biassed, being equal to the distance between the fixed point (30, 30') on the frame and the point of application (32) of the pull member (23, 40) on the lever arm (21) in said position.

2. A balancing device according to claim 1, characterized in that the pull member is formed by a pull rod (23), while the linear spring (26) is formed by a compression spring which is mounted in a housing (27) and said housing (27) being pivotally mounted in the fixed point (30) at the frame.

3. A balancing device according to claim 1, characterized in that the pull member is formed by a pulling cable (40) which is guided over a guide disposed in the fixed point (30') at the frame.

4. A balancing device according to claim 3, characterized in that the guide is formed by a guide wheel (30').

5. A balancing device according to any of claims 1, 2 or 3, characterized in that the point (30, 30') of the frame which at least during pivoting is fixed, is adjustably mounted in the frame.

6. A balancing device according to claim 5, characterized in that the adjustable point (30, 30') is movable in the direction of the axis of rotation (4) of the member (2) to be balanced.

## Patentansprüche

1. Balanciervorrichtung für eine um eine horizontale Achse (4) drehbares Glied (2) in einem Gestell und mit einem Hebelarm (21), der an einem Ende fest mit dem zu balancierenden Glied (2) verbunden ist, während ein ebenfalls im Gestell montiertes Federglied (26) nahe zum anderen Ende (22) des Hebelarms (21) angreift, dadurch gekennzeichnet, dass das genannte andere Ende (22) des Hebelarms (21) von einem durch Scharniergelenk damit verbundenen Zugglied (23, 40) angegriffen wird, wobei das genannte Zugglied (23, 40) mit einer Feder (26) verbunden und derart installiert ist, dass die auf den Hebelarm (21) ausgeübte Zugkraft sich bei jeder beliebigen Stellung dieses Arms (21) über einen Punkt (30, 30') des Gestells, der wenigstens beim Drehen des Gelenks unverändert bleibt, geltend macht, so dass in der Lage, wobei der Schwerpunkt (20) des zu balancierenden Glieds (2) genau über dessen Drehungs-Achse (4) liegt, die Richtung des Zugkrafts in der Längsrichtung des Hebelarms (21) verläuft, während die Länge, in der die Feder (26) mit einer linearen Charakteristik vorgespannt ist, dem Abstand zwischen dem festen Punkt (30, 30') am Gestell und dem Eingriffspunkt (32) des Zugglieds (23, 40) auf dem Hebelarm (21) bei der vorerwähnten Lage entspricht.

2. Balanciervorrichtung nach Anspruch 1, dadurch gekennzeichnet, dass das Zugglied aus einer Zustange (23) besteht, während die lineare Feder (26) eine in einem Gehäuse (27) montierte Druckfeder ist, wobei dass genannte Gehäuse (27) drehbar am festen Punkt (30) auf dem Gestell angebracht ist.

3. Balanciervorrichtung nach Anspruch 1, dadurch gekennzeichnet, dass das Zugglied aus einem Zugkabel (40) besteht, das über eine am festen Punkt (30') auf dem Gestell angebrachte Scheibe geleitet wird.

4. Balanciervorrichtung nach Anspruch 3, dadurch gekennzeichnet, dass die Scheibe aus einem Leitrad (30') besteht.

5. Balanciervorrichtung nach den Ansprüchen 1 bis 3, dadurch gekennzeichnet, dass der Punkt (30, 30') des Gestells, der wenigstens beim Drehen des Gelenks unbeweglich bleibt, verstellbar im Gestell angeordnet ist.

6. Balanciervorrichtung nach Anspruch 5, dadurch gekennzeichnet, dass der verstellbare Punkt (30, 30') in der Richtung der Drehachse (4) des zu balancierenden Glieds (2) versetzt werden kann.

## Revendications

1. Un dispositif d'équilibrage pour un organe (2) tournant dans un châssis autour d'un axe horizontal (4) et comportant un bras de levier (21) relié de manière fixe par une de ses extrémités à l'organe (2) à équilibrer, un organe ressort (26) monté également dans le châssis en s'engageant au voisinage de l'autre extrémité (22) du bras de levier (21), caractérisé en ce que ladite autre extrémité (22) du bras de levier (21) est engagée par un organe de traction (23, 40) qui y est relié de façon pivotante, ledit organe de traction (23, 40) étant relié à un ressort (26) et ledit organe de traction (23, 40) étant ainsi monté que la force de traction sur le bras de levier (21) dans toutes les positions dudit bras (21) passe par un point (30, 30') du châssis qui, au moins pendant le mouvement de basculement est fixe, grâce à quoi, dans la position dans laquelle le centre de gravité (20) de l'organe (2) à équilibrer est positionné précisément au-dessus de son axe de rotation (4), la direction de la force de traction s'étendant dans la direction longitudinale du bras de levier (21), la longueur selon laquelle le ressort (26), ayant une caractéristique linéaire, est tendu, est égale à la distance entre le point fixe (30, 30') sur le châssis et le point d'application (32) de l'organe de traction (23, 40) sur le bras de levier (21) dans ladite position.

2. Un dispositif d'équilibrage selon la revendication 1, caractérisé en ce que l'organe de traction est formé par une barre de traction (23), tandis que le ressort linéaire (26) est forme par un ressort de compression qui est monté dans un boîtier (27) et ledit boîtier (27) est monté en rotation au point fixe (30) sur le châssis.

3. Un dispositif d'équilibrage selon la revendication 1, caractérisé en ce que l'organe de traction est formé par un câble de traction (40) qui est guidé sur un guide disposé au point fixe (30') sur le châssis.

4. Un dispositif d'équilibrage selon la revendication 3, caractérisé en ce que le guide est formé par une roue de guidage (30').

5. Un dispositif d'équilibrage selon l'une quelconque des revendications 1, 2, ou 3, caractérisé en ce que le point (30, 30') sur le châssis qui, au moins durant le pivotement est fixe, est monté de façon réglable sur le châssis.

6. Un dispositif d'équilibrage selon la revendication 5, caractérisé en ce que le point réglable (30, 30') est déplaçable dans la direction de l'axe de rotation (4) de l'organe (2) à équilibrer.

FIG.1

FIG.2